# EUROPEAN PATENT SPECIFICATION

(11) **EP 2 048 655 B1**
(45) Date of publication and mention of the grant of the patent: **26.02.2014**
(21) Application number: 07019654.8
(22) Date of filing: 08.10.2007
(51) Int. Cl.: G10L 15/08

(54) **Context sensitive multi-stage speech recognition**
Kontextsensitive mehrstufige Spracherkennung
Reconnaissance vocale à plusieurs étages sensible au contexte

(43) Date of publication of application: 15.04.2009
(73) Proprietor: Nuance Communications, Inc., Burlington, MA 01803-4613 (US)
(72) Inventor: Gerl, Franz, 89233 Neu-Ulm (DE); Hillebrecht, Christian, 89134 Blaustein (DE); Römer, Ronald, 89233 Burlafingen (DE); Schatz, Ulrich, 73033 Göppingen (DE)
(74) Representative: Grünecker, Kinkeldey, Stockmair & Schwanhäusser

(56) References cited:
- US-A1- 2004 034 527
- US-A1- 2007 179 784
- US-B1- 7 058 573
- RICHARDSON F ET AL: "Lattice-based search strategies for large vocabulary speech recognition" ACOUSTICS, SPEECH, AND SIGNAL PROCESSING, 1995. ICASSP-95., 1995 INTERNATIONAL CONFERENCE ON DETROIT, MI, USA 9-12 MAY 1995, NEW YORK, NY, USA,IEEE, US, vol. 1, 9 May 1995 (1995-05-09), pages 576-579, XP010625298 ISBN: 0-7803-2431-5
- TEN BOSCH L ET AL: "Acoustic Scores and Symbolic Mismatch Penalties in Phone Lattices" ACOUSTICS, SPEECH AND SIGNAL PROCESSING, 2006. ICASSP 2006 PROCEEDINGS. 2006 IEEE INTERNATIONAL CONFERENCE ON TOULOUSE, FRANCE 14-19 MAY 2006, PISCATAWAY, NJ, USA,IEEE, 14 May 2006 (2006-05-14), pages I-437, XP010930210 ISBN: 1-4244-0469-X

## Description

### Field of Invention

The present invention relates to speech recognition and more particularly seeks to create phonetic representations of speech inputs using context sensitive modeling.

### Background of the invention

Speech recognition systems, i.e. apparatus for converting an acoustic signal to a sequence of words or strings, become increasingly prevalent nowadays. In the last years, due to dramatic improvement in speech recognition technology, high performance speech analyzing, recognition algorithms and speech dialog systems have commonly been made available. Present day speech input capabilities comprise voice dialing, call routing, document preparation, dictation, device controlling, etc. A speech dialog system can, e.g., be employed in a car to allow the user to control different devices such as a mobile phone, a car radio, a navigation system and/or an air condition.

During speech recognition verbal utterances, either isolated words or continuous speech, are captured by a microphone or a telephone, for example, and converted to analog electronic signals that subsequently are digitized. The digital signals are usually subject to a subsequent spectral analysis. Representations of the speech waveforms sampled typically at a rate between 6.6 kHz and 20 kHz are derived from the short term power spectra and represent a sequence of characterizing vectors containing values of what is generally referred to as features/feature parameters. The values of the feature parameters are used for the estimation of the probability that the portion of the analyzed waveform corresponds to, for example, a particular entry, i.e. a word, in a vocabulary list.

Speech recognition systems usually make use of a concatenation of phonemes that constitute a linguistic word. The phonemes are typically represented by Hidden Markov Models (HMM) that are characterized by a sequence of states each of which has a well-defined transition probability. In order to recognize a spoken word, the systems have to compute the most likely sequence of states through the HMM. This calculation is usually performed by means of the Viterbi algorithm, which iteratively determines the most likely path through the associated trellis.

Under particular circumstances, e.g., if vocabulary size exceeds storage capacity, words not contained in the vocabulary have to be modeled or templates for voice access (voice tags) have to be created, one may choose a recognition mode that allows for any sequence of simple speech subunits. Such a subunit may be part of a phoneme, at least one phoneme, at least one letter, at least one syllable or the like. Thus, the recognition engine can approximate any word in a language. There may be some advantage in using phonotactic and modeling information during this recognition stage. The recognized sequence can serve as an input to further linguistic processing.

US 2007/0179784 A1 discloses a method of indexing speech content comprising the generation of a phone lattice and processing of the phone lattice in order to generate a set of observed sequences. In particular, it is disclosed a speech recognition engine that is configured to perform a feature based extraction process to generate feature based representation of speech files to generate an N-best decoding. According to the taught model searching through the phone lattice is performed and the lattice provides multiple localized hypothesis at a single given point in time.

US 2004/0034527 A1 discloses a two-step recognition process. The first recognition process is performed on a speech sub-unit basis in order to restrict a large vocabulary list to a sub-list. The speech sub-units are matched with list entries and a hypothesis list of character sequences is created. In result of the matching procedure particular list elements that are stored in a vocabulary file are used for the second recognition process.

US 7058573 B1 discloses a multi-pass speech recognition method in which during a second pass only those expressions are considered that already were identified during the first pass as likely candidates.

L. ten Bosch et al., in a paper entitled "Acoustic Scores and Symbolic Mismatch Penalties in Phone Lattices", IEEE International Conference on Acoustics, speech and Signal Processing, 2006, Toulouse, France, pages 437 - 440, describe a multi-pass lattice decoder employing a trigram language model as well as crossword tri-phone acoustic models in order to generate N-best lists that are subsequently rescored and re-segmented by means of a an acoustic model.

In the art context dependent models of phonemes are widely used, e.g. triphones that model phonemes according to their left and right contexts. The context modeling information can, in particular, be provided by a training corpus comprising polyphone models. For instance, clustered cross-word triphones comprising some thousand states might be used. Even if one uses such context dependent models during a phonetic recognition stage there is no practical way to enforce that contexts from the models used and the final contexts of the resulting sequence are the same. If one would try to actually enforce matching contexts one would either introduce unwanted errors or would be burdened with the huge number of combinatorial possibilities. The actual goal however would be to select an optimal phonetic sequence using this fine grained modeling method.

Despite the engineering process in recent years, current speech recognition is still not satisfying and sufficiently reliable enough for many practical applications, in particular, in noisy environments as, e.g., in vehicle compartments. If speech recognition fails, the operation of a speech dialog system is necessarily deteriorated. For example, annoying repetitions of synthesized demands for user's confirmations of actions to be taken may result from insufficient recognition or even severe malfunctions may occur which negatively affect the acceptance of the speech dialog system by the consumer.

It is therefore an object of the present invention to provide an improved system and method for speech recognition that allows for a faster and more reliable human-machine interaction by speech input.

### Description of the Invention

The above-mentioned problem is solved by the method for speech recognition according to claim 1, comprising the steps of
providing a database comprising phonetic representations of entries of at least one lexical list
detecting and digitizing a speech signal representing a verbal utterance;
generating a phonetic representation of the speech signal as a first recognition result;
generating variants of the phonetic representation; and
selecting at least one of the variants of the phonetic representation as a second recognition result; and matching the second recognition result with the stored phonetic representations of entries of the at least one stored lexical list.

It is an essential feature of the present invention to generate variants of the phonetic representation of the speech signal, i.e. the first recognition result. The variants of the phonetic representation are based on various sources of information as described below. Context models can then be used that match the actual context of the speech signal that is to be recognized. The context models comprising polyphone models, in particular, triphone models can be generated using a training corpus.

The first recognition result may itself be generated by a loop of context dependent phoneme models. Due to the large number of possible contexts and the large number of phonetic alternatives there is no practical way to enforce a match of context and phonemes in the first recognition result. However, the left and right contexts in a triphone contain information about the following or preceding phonemes. This and other information may be used (see detailed description below) to generate new variants.

The variants including the phonetic representation generated as the first recognition result can be scored based on acoustic features already extracted for the first recognition stage. Based on the scoring one of the variants can be selected as a second recognition result and be used for further processing. The second recognition result always obeys the actual polyphone contexts thus using fine grained modeling. Because it was generated from a reasonable first guess it is a better phonetic approximation. Thus, speech recognition is improved and thereby speech control and verbal human-machine interaction, in general, is more successful than in the art.

The recognized phonetic representation of the utterance (e.g., of a word comprising a number of phonemes) can be obtained by a variety of methods known in the art. Acoustic features (e.g., MEL-frequency perceptual linear prediction PLP cepstral coefficients) of the speech signal are extracted. A loop of simple speech subunits is used to deliver a phonetic representation. Such a subunit may be part of a phoneme, at least one phoneme, at least one letter, at least one syllable, or the like. Thus, the recognition engine can approximate any word in a language. The phonetic representation representing the first recognition result might be, e.g., one element (the highest scored one) of an N-best list of phonetic representations representing phonetic candidates corresponding to the detected utterance. There may be some advantage in using phonotactic information or any other method in restricting all valid phonetic representations during this recognition stage. The speech subunits may be modeled according to their contexts. There may be some advantage to enhance contexts that match the following or preceding phoneme.

It may also be advantageous to use a loop of polyphone phoneme models. A phoneme is a minimal unit of speech used to distinguish meaning. In speech recognition a phoneme is often modeled according to its context as a so called polyphone model. This accommodates variations that change appearance in sound in the presence of other phonemes (allophonic variations) as well as transitions between different phonemes. Important and very common phonemes may be modeled with very long contexts, up to 5 phonemes called quinphones. For phoneme combinations that are unusual in a particular language and dependent upon training material one may have to back off to biphones or even monophones. Triphones using left and right contexts are used most often however. Some consonants e.g., /b/ and /p/ have similar effects if they follow the same vowels. Thus, the triphone models may include models where contexts are clustered in classes of phonemes with similar effects (triphone class models).

However, there are more sources of information available that may help generating variants. For instance, a priori knowledge on the probability of confusion of the recognition of particular phonemes might be used. Therefore, according to an example of the above method, the phonetic representation obtained as the first recognition result comprises phonemes and the variants are generated based on a predetermined probability of mistaking one phoneme for another. As an example, long vowels /a:/ instead of previously recognized shorter /a/ might be generated as a variant, because they are easily confused.

Furthermore, known sources of error can be corrected at this stage. For instance, voiceless consonants like "p" or "t" might erroneously be inserted during a noise event. Thus, one may introduce variants without these potential insertions at the beginning or end of the phonetic string.

The generation of variants may take advantage of multiple recognition results known as N-Best lists or hypothesis graphs as known in the art.

In addition, the variants can be generated such that they differ from each other only for parts (phonemes) that are recognized with a relatively high degree of uncertainty (measured is terms of acoustic scores or some confidence measure, for example). Thereby, the probability of a correct second recognition result can be significantly improved.

The generation of variants may take into account the duration that is modeled by a certain sound, preferably discarding those that model an unusually short or long interval. Moreover, it is known that some sounds in a given language are more important in speech recognition than others. When generating variants one may concentrate on these sounds.

It should be noted that for relatively short utterances the number of variants is typically relatively small. However, for long utterances the number of meaningful variants grows significantly and, thus, the processing time for the second recognition stage may be unacceptably long. Furthermore, it might raise delay problems when processing for checking variants is suspended until the utterance is completed.

Therefore, according to one example the method for speech recognition further comprises splitting the utterance into several intervals. Advantageously, the division into intervals may be based on prosodic features of the verbal utterance, in particular, speech pauses included in the verbal utterance. Intonation, rhythm and focus in speech can be taken into account in order to find natural breaks in the detected utterance. The syllable length, loudness, pitch and formant structure as well as the lexical stress might also be analyzed and considered in dividing the speech signal into intervals.

In the case of a high number of possible variants (even for a frame of a speech signal) and/or if the fragmentation of a speech signal is difficult due to insufficient or ambiguous prosodic information, the second recognition stage may be supplemented by one or more subsequent recognition stages for generating further variants. In particular, partial solutions of different recognition stages might be combined to obtain an optimal recognition result playing the role of the above-described second recognition result in the further matching processing. For instance, the second recognition result obtained in the second recognition stage might be used to generate and score variants in a third recognition stage. Parts of the second recognition result (e.g., recognized with a high confidence measure) and parts of a variant obtained in the third recognition stage can be combined to obtain the final phonetic representation for the detected utterance.

In the herein disclosed method for speech recognition the entries of the at least one lexical list may be linked via a grammar as known in the art. These entries may be scored against the variants of second recognition result using the same acoustic features. Thus, an entry of the lexical list (e.g., some command phrase as "stop", "abort", etc.), matching the utterance of an operator, may be detected and preferred to the optimal phonetic variant of the second recognition stage.

The present invention also provides a method for voice enrolment, comprising the steps of
detecting and digitizing a speech signal representing a verbal utterance;
generating a phonetic representation of the speech signal as a first recognition result;
generating variants of the phonetic representation, e.g., based on context information provided for the phonetic representation, in particular, provided by a training corpus comprising a polyphone model, e.g., a triphone model or based on other methods described above; selecting at least one of the variants of the phonetic representation as a second recognition result;
matching the second recognition result with stored phonetic representations of entries of at least one stored lexical list, in particular, by comparing acoustic scores of the second recognition result with acoustic scores of stored phonetic representations of entries of at least one stored lexical list; and adding the second recognition result to the stored phonetic representations, if none of the phonetic representations of the entries of the at least one stored lexical list matches the second recognition result (verbal utterance) better than a predetermined threshold.

As in the above method for speech recognition, the generation of variants of the first recognition result is an essential feature and provides the advantage of a more reliable operation as compared to the art. The thus obtained template or voice tag (new entry in the database of stored phonetic representations) is closer to the actual phonetics of the utterance than in the art, since the context information used to generate the second recognition result improves the reliability of the recognition processing.

Again, the phonetic representation usually comprises phoneme variants of which are preferably also generated on the basis of further a priori information, e.g., a predetermined probability of mistaking one phoneme for another. The variants of the phonetic representation may be scored as known in the art and the second recognition result may be generated based on the scores of the variants of the phonetic representation.

According to an example of the herein disclosed method for voice enrolment the speech signal can be divided into intervals based on prosodic information (such as speech pauses).

The present invention further provides a computer program product, comprising one or more computer readable media having computer-executable instructions for performing the steps of the above-described method for speech recognition of voice enrolment.

The above-mentioned problem is also solved by a speech recognition means, comprising a database comprising at least one lexical list; a speech input interface configured to detect a verbal utterance and to generate a speech signal corresponding to the detected verbal utterance; recognizing means configured to generate phonetic representation of the speech signal as a first recognition result; generate variants of the phonetic representation, in particular, based on context information provided for the phonetic representation; select at least one of the variants of the phonetic representation as a second recognition result; and
match the second recognition result with stored phonetic representations of entries of at least one stored lexical list.

The speech recognition means may be part of an embedded system and, in particular, may be integrated in a navigation system of a vehicle or may be provided for speech control of mechanical or electronic devices. The speech recognition means may comprise one or more microphones, in particular, a microphone array for detecting the utterance of a speaker. It may also comprise one or more loudspeakers in order to be enabled to output a recognition result or a stored phonetic representation of an entry of a lexical list, respectively.

According to one embodiment the speech recognition means is further configured to add the second recognition result to the stored phonetic representations, if none of the phonetic representations of the entries of the at least one stored lexical list matches the second recognition result better than a predetermined matching threshold. Thus, the speech recognition means may also be configured for voice enrolment, i.e. a sample of a voice is taken and a voice print (voice tag) is generated and stored.

The recognizing means may be configured to generate the variants of the phonetic representation based not only on the above-mentioned context information (e.g., provided by a triphone model used for the speech recognition) but also based on one of the above-mentioned methods, in particular, based on a predetermined probability of mistaking one phoneme for another. Further information, e.g., referring to the known fact that commonly voiceless consonants, e.g., "p" or "t", are erroneously recognized at the very end of a detected utterance can be used by the speech recognition means for generating the variants of the phonetic representation of the detected utterance that represents the first recognition result.

Moreover, the recognizing means of the speech recognition means may be configured to score the variants of the phonetic representation and to generate the second recognition result based on the scores of the variants of the phonetic representation. The scores may be some acoustic scores or confidence measures as known in the art of speech recognition processing.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 illustrates a flow diagram of basic steps of an example of the herein disclosed method for speech recognition.

Figure 2 illustrates a flow diagram of basic steps of an example of the herein disclosed method for voice enrolment.

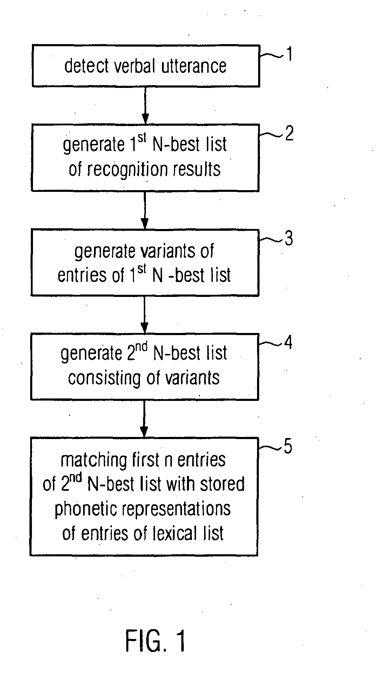

An example of the inventive method for speech recognition will be described with reference to Figure 1. First, a verbal utterance of a user of a speech recognition means is detected 1. The detected verbal utterance is processed to obtain a digital speech signal.

The digital speech signal is subject to a subsequent spectral analysis. Representations of the speech waveforms typically sampled at a rate between 6.6 kHz and 20 kHz, are derived from the short term power spectra and represent a sequence of characterizing vectors containing values of what is generally referred to as features/feature parameters. Characterizing vectors can comprise the spectral content of the speech signals. The spectrum of a speech signal is particularly adequate for further analysis. In particular, the characterizing vectors can be cepstral vectors. The cepstrum separates the glottal frequency from the vocal tract resonance. The cepstrum is obtained in two steps. A logarithmic power spectrum is calculated and on that an inverse Fourier transform is performed. In particular, the characterizing vectors may be derived from a short-term power spectrum. Usually the speech signal is divided into frames of some 10 to 20 ms duration. The feature parameters may comprise the power of some 20 discrete frequencies that are of relevance for the identification of the string representation of a spoken speech signal.

Based on the feature parameters a first N-best list of phonetic representations of the detected utterance is generated 2. The entries of this first N-best list are scored as known in the art. The scores represent the probability that a given phonetic representation actually represents, e.g., a spoken word. The scores can, e.g., be determined on the basis of an acoustic model probability given by a Hidden Markov Model or an ANN or the like. Hidden Markov Models represent one of the dominant recognition paradigms with respect to phonemes. A Hidden Markov Model is a double stochastic model according to which the generation of underlying phoneme strings and the surface acoustic representations are both represented probabilistically as Markov processes.

In the simplest case, acoustic features of phonemes can be used to determine the score. For example, an "s" usually has a temporal duration of more than 50 ms and exhibits mainly frequencies above some 4 kHz. Knowledge of this kind can be used to derive rules for statistical classification methods. The score may represent distance measures indicating how far from or close to a specified phoneme a generated sequence of characterizing vectors and thereby the associated word hypothesis is.

For the entries of the N-best list new variants are generated 3 based on context information. According to the present example, the context information is provided by a triphone model. According to a triphone model a phoneme is recognized depending on preceding and consecutive phonemes. Some consonants e.g., /b/ and /p/ have similar effects if they follow the same vowels. Thus, the triphone models may include phonemes where contexts are clustered in classes of phonemes with similar effects (triphone class models).

A short hand notation of the contexts of a phoneme may be shown by a few examples as follows: m)a(b shall describe the model of phoneme /a/ with left context /m/ and right context /b/. l(i: shall describe a biphone of phoneme /I/ with right context /i:/.

Consider, e.g., that a human user utters the name "Alina" phonetically represented by ?a:li:na: (where the question mark denotes the glottal stop). The utterance is detected 1 and, then, an N-best list of recognition results is generated:
RESULT 1: -)?(a ?)a(n I(i: I)i:(b n(a: m)6(- U)p(t
RESULT 2: -)?(a ?)a(n I(i: I)i:(b n(a: m)a(- U)p(t
RESULT 3: -)?(a ?)a(n I(e: I)i:(b n(a: m)a(- U)p(t
   in Speech Assessment Methods Phonetic Alphabet (SAMPA) notation, where the brackets indicate left and right contexts, "-" denotes a pause and "6" (ã) is the phonetic representation of an "er" vowel as in the German words "besser' or "Bauer".

RESULT 1 is assumed to be scored highest. Thus, a graphemic representation of the first recognition result would be given by "Alinerp". As shown above not only the first recognition result is obtained but also context information due to the employed triphone model used for the speech recognition process. Based on this context information variants of the first recognition result "?ali:n6p" can be generated, e.g., "?ali:nUp", "?a:ni:nUp", "?ani:nap" and "?ali:nap".

The acoustic features / feature parameters obtained by analyzing the speech signal to obtain the first N-best list are stored and used for a second recognition process. This second recognition process comprises a re-scoring of the variants (including the first recognition result "Alinerp") based on the stored feature parameters thereby generating a second N-best list consisting of at least some of the variants 4.

Besides the context information a priori known probabilities for confusing particular phonemes can be used to generate the variants in step 3. Moreover, additional background information can be used. For instance, it is known that commonly voiceless consonants, e.g., "p" or "t", are erroneously recognized at the very end of a detected utterance. Thus, in the present example variants without final "p" are also generated.

A predetermined number of the entries of the second N-best list with the highest scores are matched with stored phonetic representations of entries of one or more lexical lists 5. The best match is determined and according to the present example, "Alina" can be judged to be the correct list entry that corresponds to the detected verbal utterance.

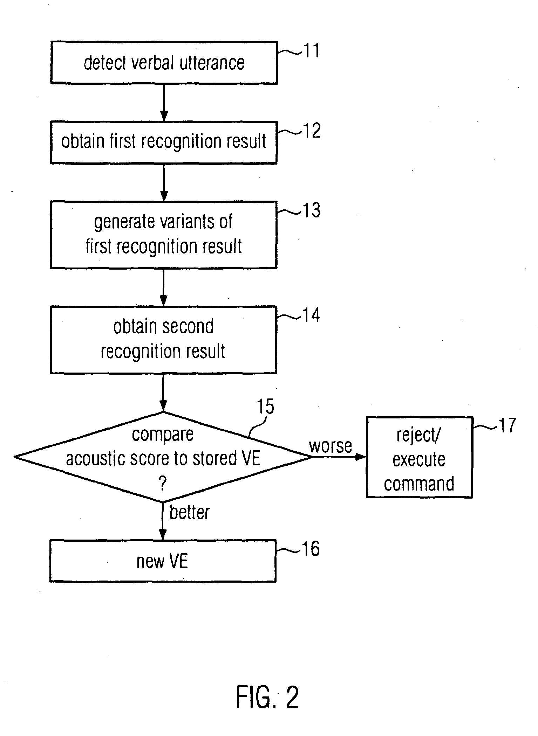

In Figure 2 a flow diagram of basic steps of an example of the herein disclosed method for voice enrolment is shown. As in the previously described example, a verbal utterance is detected 11, e.g., by a means of a microphone array comprising one or more directional microphones. A first recognition result is obtained 12 (e.g., an N-best list of word candidates) and variants thereof are generated 13 based on the relevant context information provided by the employed triphone model.

The variants are scored and the variants with the highest scores are obtained as a second recognition result 14 and are compared 15 with scores of stored phonetic representations of entries of a lexical list, i.e. with stored voice enrolments. Comparison with stored commands might also be performed thereby allowing for the recognition of commands during the enrolment phase.

If the acoustic score of a variant (the voice enrolment candidate) is better (e.g. within a predetermined distance measure) than the one of a stored voice enrolment, a new voice enrolment is performed 16, i.e. a newly trained word is added to the already stored phonetic representations. The quality of the voice enrolment can be enhanced by taking two or more voice samples (detected speech signals). If, on the other hand, the score is worse, the voice enrolment candidate is rejected 17. If a command is recognized, this command is executed 17.

It is noted that according to another example voice enrolment based on the herein disclosed method can also be used to generate and store variants of command phrases. In this case, it is checked whether a detected speech signal recognized as an already stored command shows some deviation from an expected recognized speech input for this command in terms of an acoustic score. This speech sample that nevertheless was mapped to an existing command can be saved in order to allow for a reliable recognition of the command when the same speaker utters this command in the future.

All previously discussed embodiments are not intended as limitations but serve as examples illustrating features and advantages of the invention. It is to be understood that some or all of the above described features can also be combined in different ways.

## Claims

1. Method for speech recognition, comprising the steps of
providing a database comprising phonetic representations of entries of at least one lexical list;
detecting and digitizing a speech signal representing a verbal utterance;
generating a phonetic representation of the speech signal as a first recognition result; generating variants of the phonetic representation;
selecting at least one of the variants of the phonetic representation as a second recognition result; and
matching the second recognition result with the stored phonetic representations of entries of the at least one stored lexical list.

2. Method according to claim 1, wherein the phonetic representation comprises phonemes and the variants are generated based on a predetermined probability of mistaking one phoneme for another.

3. Method according to one of the preceding claims, comprising scoring the variants of the phonetic representation and generating the second recognition result based on the scores of the variants of the phonetic representation.

4. Method according to one of the preceding claims, wherein the variants of the phonetic representation are generated based on context information comprising a polyphone model, in particular, a triphone model.

5. Method according to one of the preceding claims, wherein the entries of the at least one lexical list are scored against the variants of the second recognition result using the same acoustic features for the second recognition.

6. Method according to one of the preceding claims, further comprising dividing the speech signal into intervals.

7. Method according to claim 6, wherein the division into intervals is based on prosodic features of the verbal utterance, in particular, speech pauses included in the verbal utterance.

8. Method for voice enrolment, comprising the steps of
detecting and digitizing a speech signal representing a verbal utterance;
generating a phonetic representation of the speech signal as a first recognition result; generating variants of the phonetic representation, in particular, based on context information provided for the phonetic representation;
selecting at least one of the variants of the phonetic representation as a second recognition result;
matching the second recognition result with stored phonetic representations of entries of at least one stored lexical list; and
adding the second recognition result to the stored phonetic representations, if none of the phonetic representations of the entries of the at least one stored lexical list matches the second recognition result better than a predetermined matching threshold.

9. Method according to claim 8, further comprising generating an entry in at least one of the lexical lists corresponding to the second recognition result.

10. Computer program product, comprising one or more computer readable media having computer-executable instructions for performing the steps of the method according to one of the Claims 1-9.

11. Speech recognition means, comprising
a database comprising at least one lexical list;
a speech input interface configured to detect a verbal utterance and to generate a speech signal corresponding to the detected verbal utterance;
recognizing means configured to
generate a phonetic representation of the speech signal as a first recognition result; generate variants of the phonetic representation, in particular, based on context information provided for the phonetic representation;
select at least one of the variants of the phonetic representation as a second recognition result; and
match the second recognition result with stored phonetic representations of entries of at least one stored lexical list.

12. Speech recognition means according to claim 11, further configured to add the second recognition result to the stored phonetic representations, if none of the phonetic representations of the entries of the at least one stored lexical list matches the second recognition result better than a predetermined matching threshold.

13. Speech recognition means according to claim 11 or 12, wherein the recognizing means is configured to generate the variants of the one phonetic representation based on a predetermined probability of mistaking one phoneme for another.

14. Speech recognition means according to one of the claims 11 - 13, wherein the recognizing means is configured to score the variants of the one phonetic representation and generate the second recognition result based on the scores of the variants of the one phonetic representation.

15. Speech recognition means according to one of the claims 11 - 14, further comprising a processing means configured to divide the speech signal into intervals.

## Patentansprüche

1. Verfahren zur Spracherkennung, das die Schritte umfasst:
Bereitstellen einer Datenbank mit phonetischen Repräsentationen von Einträgen von zumindest einer lexikalischen Liste;
Detektieren und Digitalisieren eines Sprachsignals, das eine verbale Äußerung darstellt;
Erzeugen einer phonetischen Repräsentation des Sprachsignals als ein erstes Erkennungsergebnis;
Erzeugen von Varianten der phonetischen Repräsentation;
Auswählen zumindest einer der Varianten der phonetischen Repräsentation als ein zweites Erkennungsergebnis; und
Vergleichen des zweiten Erkennungsergebnisses mit den gespeicherten phonetischen Repräsentationen von Einträgen von der zumindest einen gespeicherten lexikalischen Liste.

2. Verfahren gemäß Anspruch 1, in dem die phonetischen Repräsentationen Phoneme umfassen und die Varianten auf der Grundlage einer vorbestimmten Wahrscheinlichkeit einer Verwechslung eines Phonems mit einem anderen erzeugt werden.

3. Verfahren gemäß einem der vorhergehenden Ansprüche, das Bewerten der Varianten der phonetischen Repräsentationen und Erzeugen des zweiten Erkennungsergebnisses auf der Grundlage der Bewertungen der Varianten der phonetischen Repräsentationen umfassend.

4. Verfahren gemäß einem der vorhergehenden Ansprüche, in dem die Varianten der phonetischen Repräsentationen auf der Grundlage von Kontextinformationen, die ein polyphones Modell, insbesondere ein triphones Modell, umfassen, erzeugt werden.

5. Verfahren gemäß einem der vorhergehenden Ansprüche, in dem die Einträge der zumindest einen lexikalischen Liste gegenüber den Varianten des zweiten Erkennungsergebnisses unter Verwendung derselben akustischen Merkmale für das zweite Erkennungsergebnis bewertet werden.

6. Verfahren gemäß einem der vorhergehenden Ansprüche, weiterhin das Teilen des Sprachsignals in Intervalle umfassend.

7. Verfahren gemäß Anspruch 6, in dem das Teilen in Intervalle auf prosodischen Merkmalen der verbalen Äußerung, insbesondere Sprachpausen, die in der verbalen Äußerung enthalten sind, basiert.

8. Verfahren zur Stimmregistrierung, das die Schritte umfasst:
Detektieren und Digitalisieren eines Sprachsignals, das eine verbale Äußerung darstellt;
Erzeugen einer phonetischen Repräsentation des Sprachsignals als ein erstes Erkennungsergebnis;
Erzeugen von Varianten der phonetischen Repräsentation, insbesondere auf der Grundlage von Kontextinformationen, die für die phonetische Repräsentation bereitgestellt werden;
Auswählen zumindest einer der Varianten der phonetischen Repräsentation als ein zweites Erkennungsergebnis;
Vergleichen des zweiten Erkennungsergebnisses mit gespeicherten phonetischen Repräsentationen von Einträgen von zumindest einer gespeicherten lexikalischen Liste; und
Hinzufügen des zweiten Erkennungsergebnisses zu den gespeicherten phonetischen Repräsentationen, wenn keine der phonetischen Repräsentationen der Einträge von der zumindest einen gespeicherten lexikalischen Liste mit dem zweiten Erkennungsergebnisse besser als ein vorbestimmter Passungsschwellwert zusammenpasst.

9. Verfahren gemäß Anspruch 8, weiterhin das Erzeugen eines Eintrags in zumindest eine der lexikalischen Listen entsprechend dem zweiten Erkennungsergebnis umfassend.

10. Computerprogrammprodukt, das ein oder mehrere computerlesbare Medien umfasst, die computerausführbare Anweisungen zum Ausführen der Schritte des Verfahrens gemäß einem der Ansprüche 1-9 umfassen.

11. Spracherkennungsvorrichtung, umfassend
eine Datenbank mit zumindest einer lexikalischen Liste;
eine Spracheingabeschnittstelle, die dazu ausgebildet ist,
eine verbale Äußerung zu detektieren und ein Sprachsignal entsprechend der detektierten verbalen Äußerung zu erzeugen;
Erkennungseinrichtung, die dazu ausgebildet ist,
eine phonetische Repräsentation des Sprachsignals als ein erstes Erkennungsergebnis zu erzeugen;
Varianten der phonetischen Repräsentation, insbesondere auf der Grundlage von Kontextinformationen, die für die phonetische Repräsentation bereitgestellt werden, zu erzeugen;
zumindest eine der Varianten der phonetischen Repräsentation als ein zweites Erkennungsergebnis auszuwählen; und
das zweite Erkennungsergebnisses mit gespeicherten phonetischen Repräsentationen von Einträgen von zumindest einer lexikalischen Liste zu vergleichen.

12. Spracherkennungsvorrichtung gemäß Anspruch 11, die weiterhin dazu ausgebildet ist, das zweite Erkennungsergebnis den gespeicherten phonetischen Repräsentationen hinzuzufügen, wenn keine der phonetischen Repräsentationen der Einträge von der zumindest einen gespeicherten lexikalischen Liste mit dem zweiten Erkennungsergebnis besser als ein vorbestimmter Passungsschwellwert zusammenpasst.

13. Spracherkennungsvorrichtung gemäß Anspruch 11 oder 12, in der die Erkennungseinrichtung dazu ausgebildet ist, die Varianten der einen phonetischen Repräsentation auf der Grundlage einer vorbestimmten Wahrscheinlichkeit einer Verwechslung eines Phonems mit einem anderen zu erzeugen.

14. Spracherkennungsvorrichtung gemäß einem der Ansprüche 11-13, in der die Erkennungseinrichtung dazu ausgebildet ist, die Varianten der einen phonetischen Repräsentation zu bewerten und das zweite Erkennungsergebnis auf der Grundlage der Bewertungen der Varianten der einen phonetischen Repräsentation zu erzeugen.

15. Spracherkennungsvorrichtung gemäß einem der Ansprüche 11 - 14, die weiterhin eine Verarbeitungseinrichtung umfasst, die dazu ausgebildet ist, das Sprachsignal in Intervalle zu teilen.

## Revendications

1. Procédé de reconnaissance vocale, comprenant les étapes consistant à :
fournir une base de données comprenant des représentations phonétiques d'entrées d'au moins une liste lexicale ;
détecter et numériser un signal vocal représentant un énoncé verbal ;
générer une représentation phonétique du signal vocal en tant que premier résultat de reconnaissance ;
générer des variantes de la représentation phonétique ;
sélectionner au moins l'une des variantes de la représentation phonétique en tant que second résultat de reconnaissance ; et
faire correspondre le second résultat de reconnaissance avec les représentations phonétiques mémorisées d'entrées de l'au moins une liste lexicale mémorisée.

2. Procédé selon la revendication 1, dans lequel la représentation phonétique comprend des phonèmes et les variantes sont générées en se basant sur une probabilité prédéterminée de confusion d'un phonème avec un autre.

3. Procédé selon l'une des revendications précédentes, comprenant la notation des variantes de la représentation phonétique et la génération du second
résultat de reconnaissance en se basant sur les notes des variantes de la représentation phonétique.

4. Procédé selon l'une des revendications précédentes, dans lequel les variantes de la représentation phonétique sont générées en se basant sur des informations contextuelles comprenant un modèle polyphonique en particulier un modèle triphonique.

5. Procédé selon l'une des revendications précédentes, dans lequel les entrées de l'au moins une liste lexicale sont notées en fonction des variantes du second résultat de reconnaissance, en utilisant les mêmes propriétés acoustiques pour la seconde reconnaissance.

6. Procédé selon l'une des revendications précédentes, comprenant en outre la division du signal vocal en intervalles.

7. Procédé selon la revendication 6, dans lequel la division en intervalle est fondée sur des caractéristiques prosodiques de l'énoncé verbal, en particulier les pauses vocales incluses dans l'énoncé verbal.

8. Procédé d'inscription vocale, comprenant les étapes consistant à
détecter et numériser un signal vocal représentant un énoncé verbal ;
générer une représentation phonétique du signal vocal en tant que premier résultat de reconnaissance ;
générer des variantes de la représentation phonétique, en particulier, en se basant sur des
informations contextuelles fournies pour la représentation phonétique ;
sélectionner au moins l'une des variantes de la représentation phonétique en tant que second résultat de reconnaissance ;
faire correspondre le second résultat de reconnaissance avec les représentations phonétiques mémorisées d'entrées de l'au moins une liste lexicale mémorisée ; et
ajouter le second résultat de reconnaissance aux représentations phonétiques mémorisées, si aucune des représentations phonétiques des entrées de l'au moins une liste lexicale mémorisée ne correspond mieux au second résultat de reconnaissance qu'un seuil de correspondance prédéterminé.

9. Procédé selon la revendication 8, comprenant en outre la génération d'une entrée dans au moins l'une des listes lexicales correspondant au second résultat de reconnaissance.

10. Programme informatique comprenant un ou plusieurs supports lisibles par un ordinateur comportant des instructions exécutables par un ordinateur pour effectuer les étapes du procédé selon l'une des revendications 1 à 9.

11. Moyen de reconnaissance vocale comprenant :
une base de données comprenant au moins une liste lexicale ;
une interface d'entrée vocale configurée pour détecter un énoncé verbal et pour générer un signal vocal correspondant à l'énoncé verbal détecté ;
un moyen de reconnaissance configuré pour :
générer une représentation phonétique du signal vocal en tant que premier résultat de reconnaissance ;
générer des variantes de la représentation phonétique, en se basant en particulier sur des informations contextuelles fournies pour la représentation phonétique ;
sélectionner au moins l'une des variantes de la représentation phonétique en tant que second résultat de reconnaissance ; et
faire correspondre le second résultat de reconnaissance avec les représentations phonétiques mémorisées d'entrées de l'au moins une liste lexicale mémorisée.

12. Moyen de reconnaissance vocale selon la revendication 11, configuré en outre pour ajouter le second résultat de reconnaissance aux représentations phonétiques mémorisées, si aucune des représentations phonétiques des entrées de l'au moins une liste lexicale mémorisée ne correspond mieux au second résultat de reconnaissance qu'un seuil de correspondance prédéterminé.

13. Moyen de reconnaissance vocale selon l'une des revendications 11 ou 12, dans lequel le moyen de reconnaissance est configuré pour générer les variantes de la représentation phonétique en se basant sur une probabilité prédéterminée de confusion d'un phonème avec un autre.

14. Moyen de reconnaissance vocale selon l'une des revendications 11 à 13, dans lequel le moyen de reconnaissance est configuré pour noter les variantes de la représentation phonétique et générer le second
résultat de reconnaissance en se basant sur les notes des variantes de la représentation phonétique.

15. Moyen de reconnaissance vocale selon l'une des revendications 11 à 14, comprenant en outre un moyen de traitement configuré pour diviser le signal vocal en intervalles.
